# EUROPEAN PATENT APPLICATION

(11) **EP 4 661 251 A1**
(43) Date of publication of application: **10.12.2025**
(21) Application number: 23919931.8
(22) Date of filing: 07.12.2023
(51) Int. Cl.: H02J 50/80, H02J 7/00, H02J 50/12

(54) **SYSTEM FOR NON-CONTACT POWER SUPPLYING DURING TRAVELING, POWER SUPPLYING DEVICE, AND POWER RECEIVING DEVICE**

(30) Priority: 31.01.2023 JP 2023013359
(71) Applicant: TOYOTA JIDOSHA KABUSHIKI KAISHA, Toyota-shi, Aichi-ken 471-8571 (JP); DENSO CORPORATION, Kariya-shi, Aichi 448-8661 (JP)
(72) Inventor: HASHIMOTO, Toshiya, Toyota-shi, Aichi 471-8571 (JP); MAEMURA, Masato, Toyota-shi, Aichi 471-8571 (JP); TSUGE, Shogo, Toyota-shi, Aichi 471-8571 (JP); IKEMURA, Ryosuke, Toyota-shi, Aichi 471-8571 (JP); KANESAKI, Masaki, Kariya-shi, Aichi 448-8661 (JP); YAMAGUCHI, Nobuhisa, Kariya-shi, Aichi 448-8661 (JP); OBAYASHI, Kazuyoshi, Kariya-shi, Aichi 448-8661 (JP); TANI, Keisuke, Kariya-shi, Aichi 448-8661 (JP); SUMIYA, Hayato, Kariya-shi, Aichi 448-8661 (JP)
(74) Representative: TBK
(86) International application number: PCT/JP2023/043871
(87) International publication number: WO 2024/161796

(57) **Abstract**

A dynamic non-contact power feeding system of the present invention is a dynamic non-contact power feeding system that feeds, in a non-contact manner, power from a road-side power feeding apparatus to a traveling vehicle equipped with a vehicle-side power reception apparatus, wherein the dynamic non-contact power feeding system compares information of wide-area wireless communication with information of narrow-area wireless communication in consideration of a delay, performs a power feeding operation from the road-side power feeding apparatus to the vehicle-side power reception apparatus when the information of the wide-area wireless communication and the information of the narrow-area wireless communication are consistent, and performs preliminarily set predetermined measures in the case of inconsistency.

## Description

### Field

The present invention relates to a dynamic non-contact power feeding system, a power feeding apparatus, and a power reception apparatus.

### Background

Patent Literature 1 discloses a technique including a communication unit that performs wireless communication between a power transmission apparatus and a power reception apparatus, in which the communication unit switches a communication range between wide-area wireless communication and narrow-area wireless communication.

### Citation List

### Patent Literature

Patent Literature 1: JP 2013-240132 A

### Summary

### Technical Problem

In dynamic non-contact power feeding in which power is fed from a power transmission apparatus in a non-contact manner to a traveling vehicle equipped with a power reception apparatus, different communication is used: wide-area wireless communication in which a large amount of information is communicated in a wide area and a response speed is slow and narrow-area wireless communication in which a small amount of information is communicated in a narrow area and a response speed is fast. Therefore, even when the delay of the wide-area wireless communication is taken into consideration, there is room for improvement in what kind of measures should be executed in a case where information such as requested power is different between the wide-area wireless communication and the narrow-area wireless communication.

The present invention has been made in view of the above problem, and an object thereof is to provide a dynamic non-contact power feeding system, a power feeding apparatus, and a power reception apparatus capable of performing predetermined measures according to consistency between information of wide-area wireless communication and information of narrow-area wireless communication. Solution to Problem

To resolve the above problem and attain the object, a dynamic non-contact power feeding system according to the present invention feeds, in a non-contact manner, power from a road-side power feeding apparatus to a traveling vehicle equipped with a vehicle-side power reception apparatus. Further, the road-side power feeding apparatus includes a first communication apparatus for performing wide-area wireless communication with the vehicle-side power reception apparatus, and a second communication apparatus for performing narrow-area wireless communication with the vehicle-side power reception apparatus, the vehicle-side power reception apparatus includes a third communication apparatus for performing the wide-area wireless communication with the road-side power feeding apparatus, and a fourth communication apparatus for performing the narrow-area wireless communication with the road-side power feeding apparatus, the road-side power feeding apparatus includes a consistency check means capable of comparing information of the wide-area wireless communication transmitted from the third communication apparatus and acquired by the first communication apparatus with information of the narrow-area wireless communication transmitted from the fourth communication apparatus and acquired by the second communication apparatus to determine consistency between the information of the wide-area wireless communication and the information of the narrow-area wireless communication, the consistency check means includes a delay consideration means that takes into consideration a delay of the wide-area wireless communication, and the consistency check means compares the information of the wide-area wireless communication with the information of the narrow-area wireless communication in consideration of the delay, performs a power feeding operation from the road-side power feeding apparatus to the vehicle-side power reception apparatus when the information of the wide-area wireless communication and the information of the narrow-area wireless communication are consistent, and performs preliminarily set predetermined measures when the information of the wide-area wireless communication and the information of the narrow-area wireless communication are inconsistent.

As a result, the dynamic non-contact power feeding system according to the present invention can take into consideration the communication delay time of the wide-area wireless communication, and perform predetermined measures according to consistency between the information of the wide-area wireless communication and the information of the narrow-area wireless communication.

Further, in the above, the delay consideration means may have a predetermined communication delay time in the wide-area wireless communication, and the consistency check means may compare information of the narrow-area wireless communication acquired at a time earlier by the communication delay time with respect to the acquired information of the wide-area wireless communication.

As a result, the consistency can be determined based on whether or not the acquired information of the wide-area wireless communication matches the information of the narrow-area wireless communication acquired at a time earlier by the communication delay time of the wide-area wireless communication.

Further, in the above, the third communication apparatus and the fourth communication apparatus may respectively transmit identification means capable of identifying a transmission timing of the information to the first communication apparatus and the second communication apparatus together with the information, and the delay consideration means may output the information of the wide-area wireless communication and the information of the narrow-area wireless communication at a same transmission timing to the consistency check means based on the acquired identification means.

As a result, it is possible to determine consistency based on whether or not the information of the wide-area wireless communication and the information of the narrow-area wireless communication, which are a combination of the same transmission timing, match each other.

Further, a power feeding apparatus according to the present invention provided in a road on which a vehicle equipped with a vehicle-side power reception apparatus travels, the power feeding apparatus feeding power to the traveling vehicle in a non-contact manner, includes: a first communication apparatus for performing wide-area wireless communication with a third communication apparatus of the vehicle-side power reception apparatus, and a second communication apparatus for performing narrow-area wireless communication with a fourth communication apparatus of the vehicle-side power reception apparatus; and a consistency check means capable of comparing information of the wide-area wireless communication transmitted from the third communication apparatus and acquired by the first communication apparatus with information of the narrow-area wireless communication transmitted from the fourth communication apparatus and acquired by the second communication apparatus to determine consistency between the information of the wide-area wireless communication and the information of the narrow-area wireless communication. Further, the consistency check means includes a delay consideration means that takes into consideration a delay of the wide-area wireless communication, and the consistency check means compares the information of the wide-area wireless communication with the information of the narrow-area wireless communication in consideration of the delay, performs a power feeding operation to the vehicle-side power reception apparatus when the information of the wide-area wireless communication and the information of the narrow-area wireless communication are consistent, and performs preliminarily set predetermined measures when the information of the wide-area wireless communication and the information of the narrow-area wireless communication are inconsistent.

As a result, the power feeding apparatus according to the present invention can perform predetermined measures according to consistency between the information of the wide-area wireless communication and the information of the narrow-area wireless communication in consideration of the communication delay time of the wide-area wireless communication.

Further, a power reception apparatus according to the present invention mounted on a traveling vehicle, the power reception apparatus receiving power fed from a road-side power feeding apparatus in a non-contact manner to the vehicle, includes: a third communication apparatus for performing wide-area wireless communication with a first communication apparatus of the road-side power feeding apparatus, and a fourth communication apparatus for performing narrow-area wireless communication with a second communication apparatus of the road-side power feeding apparatus. Further, a consistency check means, capable of comparing information of the wide-area wireless communication transmitted from the third communication apparatus and acquired by the first communication apparatus with information of the narrow-area wireless communication transmitted from the fourth communication apparatus and acquired by the second communication apparatus to determine consistency between the information of the wide-area wireless communication and the information of the narrow-area wireless communication, is provided in the road-side power feeding apparatus, and includes a delay consideration means that takes into consideration a delay of the wide-area wireless communication compares the information of the wide-area wireless communication with the information of the narrow-area wireless communication in consideration of the delay, when the information of the wide-area wireless communication and the information of the narrow-area wireless communication are consistent, a power feeding operation is performed to receive power from the road-side power feeding apparatus, and when the information of the wide-area wireless communication and the information of the narrow-area wireless communication are inconsistent, preliminarily set predetermined measures are performed by the road-side power feeding apparatus.

As a result, the power reception apparatus according to the present invention can perform predetermined measures according to consistency between the information of the wide-area wireless communication and the information of the narrow-area wireless communication in consideration of the communication delay time of the wide-area wireless communication.

### Advantageous Effects of Invention

The dynamic non-contact power feeding system, the power feeding apparatus, and the power reception apparatus according to the present invention have an effect of being able to take into consideration the communication delay time of the wide-area wireless communication and perform predetermined measures according to consistency between the information of the wide-area wireless communication and the information of the narrow-area wireless communication.

### Brief Description of Drawings

FIG. 1 is a schematic diagram illustrating a wireless power transfer system according to an embodiment.
FIG. 2 is a diagram illustrating an overall configuration of the wireless power transfer system.
FIG. 3 is a schematic diagram for describing wide-area wireless communication of the wireless power transfer system.
FIG. 4 is a block diagram for describing a functional configuration of a power transmission electronic control unit (ECU).
FIG. 5 is a block diagram for describing a functional configuration of a vehicle ECU.
FIG. 6 is a diagram for describing a power transfer process.
FIG. 7 is a sequence diagram illustrating a case where communication using wide-area wireless communication is performed between a vehicle and a feeding apparatus.
FIG. 8 is a sequence diagram illustrating an operation after dynamic power feeding from the feeding apparatus to the vehicle is ended.
FIG. 9 is a flowchart illustrating a first example of control for determining consistency by comparing information of wide-area wireless communication with information of narrow-area wireless communication.
FIG. 10 is a flowchart illustrating a second example of control for determining consistency by comparing information of wide-area wireless communication with information of narrow-area wireless communication.
FIG. 11 is a flowchart illustrating a third example of control for determining consistency by comparing information of wide-area wireless communication with information of narrow-area wireless communication.

### Description of Embodiments

Hereinafter, an embodiment of the dynamic non-contact power feeding system, the power feeding apparatus, and the power reception apparatus according to the present invention will be described. Note that the present invention is not limited by the present embodiment.

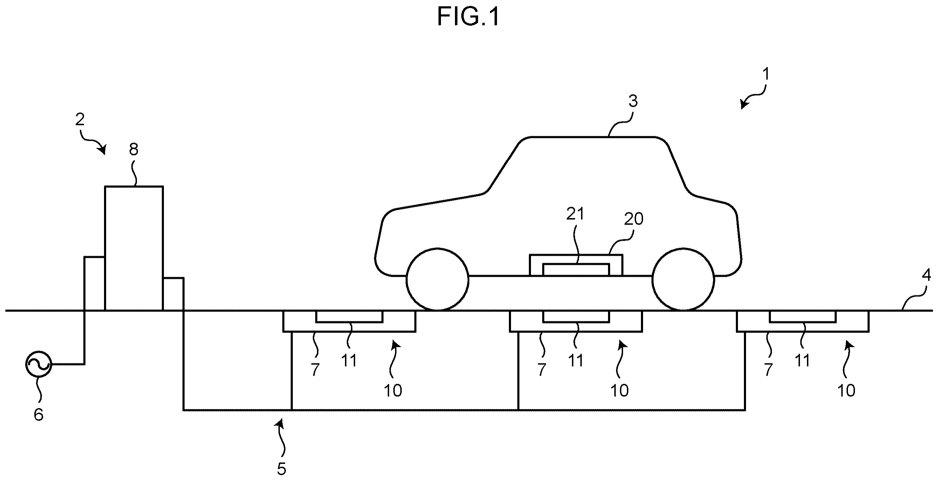

FIG. 1 is a schematic diagram illustrating a wireless power transfer system according to an embodiment. A wireless power transfer system (Wireless Power Transfer System) 1 is a dynamic non-contact power feeding system that includes a feeding facility 2 and a vehicle 3 and feeds power from the feeding facility 2 to the traveling vehicle 3. The feeding facility 2 is a facility that feeds power to the traveling vehicle 3 in a non-contact manner. The vehicle 3 is an electric vehicle that can be charged with power fed from an external power supply, and is, for example, a battery electric vehicle (BEV), a plug-in hybrid electric vehicle (PHEV), or the like.

The wireless power transfer system 1 performs wireless power transfer from the feeding facility 2 to the vehicle 3 by magnetic field resonance coupling (magnetic field resonance). The wireless power transfer system 1 transfers power from the feeding facility 2 to the vehicle 3 traveling on a road 4 in a non-contact manner. That is, the wireless power transfer system 1 transfers power by a magnetic field resonance method, and achieves dynamic power feeding to the vehicle 3 using magnetic field resonance coupling (magnetic field resonance). The wireless power transfer system 1 can be expressed as a dynamic wireless power transfer (D-WPT) system or a magnetic field dynamic wireless power transfer (MF-D-WPT) system.

The feeding facility 2 includes a feeding apparatus 5 that is a road-side power feeding apparatus, and an alternating-current power supply 6 that feeds power to the feeding apparatus 5. The feeding apparatus 5 transfers the power fed from the alternating-current power supply 6 to the vehicle 3 in a non-contact manner. The alternating-current power supply 6 is, for example, a commercially available power supply. The feeding apparatus 5 includes a power transmission apparatus 10 including a primary coil 11.

The feeding apparatus 5 includes a segment 7 including the primary coil 11 and a management apparatus 8 that manages the segment 7. The segment 7 is embedded in a lane of the road 4. The management apparatus 8 is installed beside the road 4. The segment 7 is electrically connected to the management apparatus 8. The management apparatus 8 is electrically connected to the alternating-current power supply 6, and feeds the power of the alternating-current power supply 6 to the segment 7. The segment 7 is electrically connected to the alternating-current power supply 6 via the management apparatus 8. A plurality of segments 7 can be disposed along the lane of the road 4. For example, as illustrated in FIG. 1, the feeding apparatus 5 includes three segments 7 installed side by side along the lane in the road 4, and one management apparatus 8 to which the three segments 7 are connected. The segments 7 have a function of transferring power from the feeding apparatus 5 to the vehicle 3 in a non-contact manner. The management apparatus 8 has a function of controlling wireless power transfer in the segments 7.

The vehicle 3 includes a power reception apparatus 20 that is a vehicle-side power reception apparatus including a secondary coil 21. The power reception apparatus 20 is provided at the bottom of the vehicle body of the vehicle 3. When the vehicle 3 travels on the road 4 in which the primary coils 11 are installed, the primary coils 11 on the ground side and the secondary coil 21 on the vehicle side face each other in an up-down direction. The wireless power transfer system 1 transfers power from the primary coils 11 of the power transmission apparatuses 10 to the secondary coil 21 of the power reception apparatus 20 in a non-contact manner while the vehicle 3 is traveling on the road 4.

In this description, traveling means a state in which the vehicle 3 is located on the road 4 for traveling. The traveling includes a state in which the vehicle 3 is temporarily stopped on the road 4. For example, the traveling also includes a state in which the vehicle 3 is stopped on the road 4 due to waiting for a traffic light or the like. On the other hand, the traveling does not include, for example, a case where the vehicle 3 is parked or stopped even in a state in which the vehicle 3 is located on the road 4.

In addition, in this description, the lane in which the primary coils 11 (segments 7) are embedded may be referred to as a D-WPT lane, and the place that is a partial section of the road 4 and where wireless power transfer by the feeding apparatus 5 can be performed may be referred to as a D-WPT charging site. In the D-WPT lane and the D-WPT charging site, a plurality of primary coils 11 (a plurality of segments 7) is installed side by side in a traveling direction of the vehicle 3 over a predetermined section of the road 4.

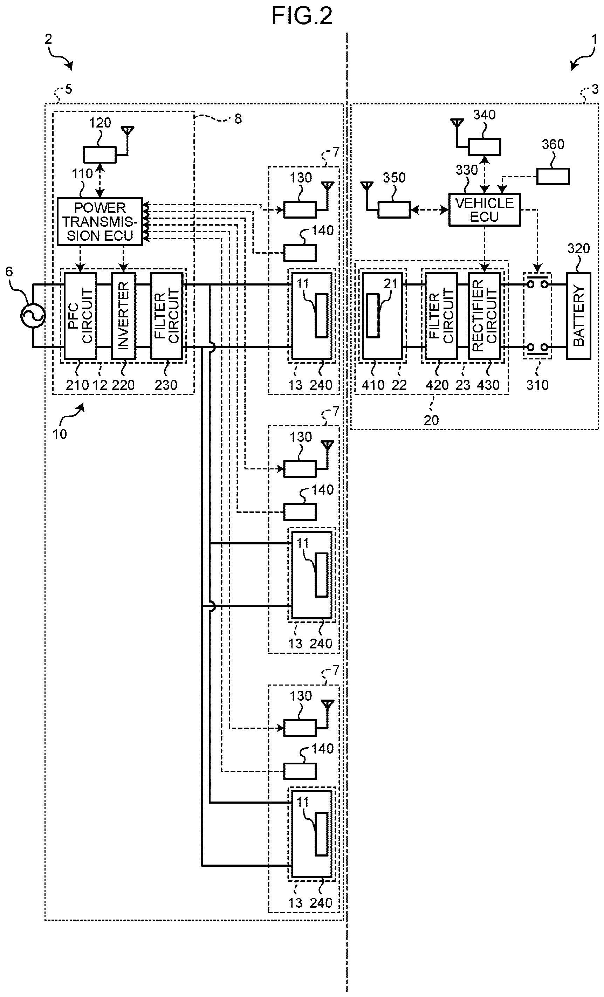

FIG. 2 is a diagram illustrating an overall configuration of the wireless power transfer system 1. In the feeding facility 2, the feeding apparatus 5 and the alternating-current power supply 6 are electrically connected. In the feeding apparatus 5, the segments 7 and the management apparatus 8 are electrically connected.

The feeding apparatus 5 includes a configuration provided in the management apparatus 8 and a configuration provided in the segments 7. The feeding apparatus 5 includes the power transmission apparatus 10, a power transmission electronic control unit (ECU) 110, a first communication apparatus 120, a second communication apparatus 130, and a foreign object sensing apparatus 140.

The power transmission apparatus 10 includes an electric circuit connected to the alternating-current power supply 6. The power transmission apparatus 10 includes a power factor collection (PFC) circuit 210, an inverter (INV) 220, a filter circuit 230, and a power transmission-side resonant circuit 240.

The PFC circuit 210 improves the power factor of the alternating-current power input from the alternating-current power supply 6, converts the alternating-current power into direct-current power, and outputs the direct-current power to the inverter 220. The PFC circuit 210 is configured to include an AC/DC converter. The PFC circuit 210 is electrically connected to the alternating-current power supply 6.

The inverter 220 converts the direct-current power input from the PFC circuit 210 into alternating-current power. Each switching element of the inverter 220 includes an insulated gate bipolar transistor (IGBT), a metal-oxide-semiconductor field effect transistor (MOSFET), or the like, and performs a switching operation according to a control signal from the power transmission ECU 110. For example, the drive frequency of the inverter 220 is 85 kHz. The inverter 220 outputs the converted alternating-current power to the filter circuit 230.

The filter circuit 230 removes noise included in the alternating-current current input from the inverter 220, and feeds the alternating-current power from which the noise has been removed to the power transmission-side resonant circuit 240. The filter circuit 230 is an LC filter in which a coil and a capacitor are combined. For example, the filter circuit 230 includes a T-type filter in which two coils and one capacitor are disposed in a T-shape. The PFC circuit 210, the inverter 220, and the filter circuit 230 constitute a power conversion unit 12 of the power transmission apparatus 10.

The power transmission-side resonant circuit 240 is a power transmission unit that transfers the alternating-current power fed from the filter circuit 230 to the power reception apparatus 20 in a non-contact manner. When the alternating-current power is fed from the filter circuit 230 to the power transmission-side resonant circuit 240, the current flows through the primary coil 11, and a magnetic field for power transmission is generated.

The power transmission-side resonant circuit 240 includes the primary coil 11 and a resonant capacitor. The primary coil 11 is a power transmission coil. The resonant capacitor is connected in series to one end of the primary coil 11, and adjusts a resonance frequency of the power transmission-side resonant circuit. The resonance frequency is 10 kHz to 100 GHz, preferably 85 kHz. For example, the power transmission apparatus 10 is configured such that the resonance frequency of the power transmission-side resonant circuit 240 and the drive frequency of the inverter 220 match. The power transmission-side resonant circuit 240 constitutes a primary apparatus 13 of the power transmission apparatus 10.

The power transmission apparatus 10 includes the power conversion unit 12 and the primary apparatus 13. The power conversion unit 12 includes the PFC circuit 210, the inverter 220, and the filter circuit 230. The primary apparatus 13 includes the power transmission-side resonant circuit 240. The power transmission apparatus 10 has a configuration in which the power conversion unit 12 is provided in the management apparatus 8 and the primary apparatus 13 is provided in the segment 7.

In the feeding apparatus 5, the power conversion unit 12 of the power transmission apparatus 10, the power transmission ECU 110, and the first communication apparatus 120 are provided in the management apparatus 8, and the primary apparatus 13 of the power transmission apparatus 10, the second communication apparatus 130, and the foreign object sensing apparatus 140 are provided in the segment 7.

The power transmission ECU 110 is an electronic control apparatus that controls the feeding apparatus 5. The power transmission ECU 110 includes a processor and a memory. The processor includes a central processing unit (CPU), a digital signal processor (DSP), a field-programmable gate array (FPGA), and the like. The memory is a main storage apparatus, and includes random access memory (RAM), read only memory (ROM), and the like. The power transmission ECU 110 loads a program stored in a storage unit into a work area of the memory (main storage apparatus) and executes it, and controls each constituent unit or the like through the execution of the program to achieve a function that meets a predetermined purpose. The storage unit includes a recording medium such as an erasable programmable ROM (EPROM), a hard disk drive (HDD), and a removable medium. Examples of the removable medium include a disc recording medium such as universal serial bus (USB) memory, compact disc (CD), digital versatile disc (DVD), and Blu-ray (registered trademark) disc (BD). The storage unit can store an operating system (OS), various programs, various tables, various databases, and the like. Signals from various sensors are input to the power transmission ECU 110. A signal from the foreign object sensing apparatus 140 is input to the power transmission ECU 110. Then, the power transmission ECU 110 executes various types of control on the basis of the signals input from various sensors.

For example, the power transmission ECU 110 executes power control for adjusting power transmission power. In this power control, the power transmission ECU 110 controls the power transmission apparatus 10. The power transmission ECU 110 outputs a control signal to the power conversion unit 12 in order to control the power fed from the power conversion unit 12 to the primary apparatus 13. The power transmission ECU 110 controls switching elements included in the PFC circuit 210 to adjust power transmission power, and controls switching elements included in the inverter 220 to adjust power transmission power.

In addition, the power transmission ECU 110 executes communication control for controlling communication with the vehicle 3. In the communication control, the power transmission ECU 110 controls the first communication apparatus 120 and the second communication apparatus 130.

The first communication apparatus 120 is a ground-side communication apparatus that performs wide-area wireless communication. The first communication apparatus 120 performs wireless communication with the vehicle 3 before approaching the D-WPT lane among vehicles 3 traveling on the road 4. The state before approaching the D-WPT lane means that the vehicle 3 is at a position where the narrow-area wireless communication with the feeding apparatus 5 cannot be performed.

The wide-area wireless communication is communication in which a communication distance is 10 meters to 10 kilometers. The wide-area wireless communication is communication having a longer communication distance than the narrow-area wireless communication. As the wide-area wireless communication, various types of wireless communication having a long communication distance can be used. For example, communication conforming to communication standards such as 4G, LTE, 5G, and WiMAX formulated by 3GPP (registered trademark) and IEEE is used for wide-area wireless communication. In the wireless power transfer system 1, vehicle information associated with vehicle identification information (vehicle ID) is transmitted from the vehicle 3 to the feeding apparatus 5 using the wide-area wireless communication.

The second communication apparatus 130 is a ground-side communication apparatus that performs narrow-area wireless communication. The second communication apparatus 130 performs wireless communication with the vehicle 3 approaching or entering the D-WPT lane among vehicles 3 traveling on the road 4. The state of approaching the D-WPT lane means that the vehicle 3 is at a position where the narrow-area wireless communication with the feeding apparatus 5 can be performed.

The narrow-area wireless communication is communication in which a communication distance is less than 10 meters. The narrow-area wireless communication is communication having a shorter communication distance than the wide-area wireless communication. As the narrow-area wireless communication, various types of short-range wireless communication having a short communication distance can be used. For example, communication conforming to any communication standard formulated by IEEE, ISO, IEC, or the like is used for narrow-area wireless communication. As an example, Wi-Fi (registered trademark), Bluetooth (registered trademark), ZigBee (registered trademark), or the like is used for narrow-area wireless communication. Alternatively, as a technique for performing narrow-area wireless communication, radio frequency identification (RFID), dedicated short range communication (DSRC), or the like may be used. In the wireless power transfer system 1, vehicle identification information or the like is transmitted from the vehicle 3 to the feeding apparatus 5 using the narrow-area wireless communication.

The foreign object sensing apparatus 140 senses a metal foreign object, a living object, or the like existing above the primary coil 11. The foreign object sensing apparatus 140 includes, for example, a sensor coil, an imaging apparatus, and the like installed on the ground. The foreign object sensing apparatus 140 exerts a foreign object sensing function (Foreign Object Detection: FOD) and a living object protection function (Living Object Protection: LOP) in the wireless power transfer system 1.

In the feeding apparatus 5, the configuration of the power transmission apparatus 10 is disposed by being divided into the segment 7 and the management apparatus 8, and the three segments 7 are connected to one management apparatus 8. The power transmission apparatus 10 is configured such that one inverter feeds power to three power transmission-side resonant circuits 240. In addition, in the feeding apparatus 5, a signal from each segment 7 is input to the management apparatus 8. Signals from the second communication apparatus 130 and a foreign object sensing apparatus 14 provided in a first segment are input to the power transmission ECU 110. Similarly, signals from the second communication apparatus 130 and the foreign object sensing apparatus 14 provided in a second segment are input to the power transmission ECU 110. Signals from the second communication apparatus 130 and the foreign object sensing apparatus 14 provided in a third segment are input to the power transmission ECU 110. The power transmission ECU 110 can grasp the state of each segment 7 based on the signal input from each segment 7.

The vehicle 3 includes the power reception apparatus 20, a charging relay 310, a battery 320, a vehicle ECU 330, a third communication apparatus 340, a fourth communication apparatus 350, and a global positioning system (GPS) receiver 360.

The power reception apparatus 20 feeds the power received from the power transmission apparatus 10 to the battery 320. The power reception apparatus 20 is electrically connected to the battery 320 via the charging relay 310. The power reception apparatus 20 includes a power reception-side resonant circuit 410, a filter circuit 420, and a rectifier circuit 430.

The power reception-side resonant circuit 410 is a power reception unit that receives power transferred from the power transmission apparatus 10 in a non-contact manner. The power reception-side resonant circuit 410 includes a power reception-side resonant circuit including the secondary coil 21 and the resonant capacitor. The secondary coil 21 is a power reception coil that receives power transferred from the primary coil 11 in a non-contact manner. The resonant capacitor is connected in series to one end of the secondary coil 21, and adjusts a resonance frequency of the power reception-side resonant circuit. The resonance frequency of the power reception-side resonant circuit 410 is determined to match the resonance frequency of the power transmission-side resonant circuit 240.

The resonance frequency of the power reception-side resonant circuit 410 is the same as the resonance frequency of the power transmission-side resonant circuit 240. Therefore, when a magnetic field is generated by the power transmission-side resonant circuit 240 in a state where the power reception-side resonant circuit 410 faces the power transmission-side resonant circuit 240, vibration of the magnetic field is transmitted to the power reception-side resonant circuit 410. The primary coil 11 and the secondary coil 21 are brought into a resonance state. When an induced current flows through the secondary coil 21 by electromagnetic induction, an induced electromotive force is generated in the power reception-side resonant circuit 410. In this way, the power transferred from the power transmission-side resonant circuit 240 in a non-contact manner is received by the power reception-side resonant circuit 410. Then, the power reception-side resonant circuit 410 feeds the power received from the power transmission-side resonant circuit 240 to the filter circuit 420. The power reception-side resonant circuit 410 constitutes a secondary apparatus 22 of the power reception apparatus 20.

The filter circuit 420 removes noise included in the alternating-current current input from the power reception-side resonant circuit 410, and outputs the alternating-current power from which the noise has been removed to the rectifier circuit 430. The filter circuit 420 is an LC filter in which a coil and a capacitor are combined. For example, the filter circuit 420 includes a T-type filter in which two coils and one capacitor are disposed in a T-shape.

The rectifier circuit 430 converts the alternating-current power input from the filter circuit 420 into direct-current power and outputs the direct-current power to the battery 320. The rectifier circuit 430 includes, for example, a full-bridge circuit in which four diodes are full-bridge connected as rectifier elements. A switching element is connected in parallel to each diode of the rectifier circuit 430. Each switching element of the rectifier circuit 430 includes an IGBT, and performs a switching operation according to a control signal from the vehicle ECU 330. The rectifier circuit 430 feeds the converted direct-current power to the battery 320. The filter circuit 420 and the rectifier circuit 430 constitute a power conversion unit 23 of the power reception apparatus 20.

The power reception apparatus 20 includes the secondary apparatus 22 and the power conversion unit 23. The secondary apparatus 22 includes the power reception-side resonant circuit 410. The power conversion unit 23 includes the filter circuit 420 and the rectifier circuit 430.

The charging relay 310 is provided between the rectifier circuit 430 and the battery 320. An open/close state of the charging relay 310 is controlled by the vehicle ECU 330. When the battery 320 is charged by the power transmission apparatus 10, the charging relay 310 is controlled to a closed state. When the charging relay 310 is in the closed state, the rectifier circuit 430 and the battery 320 are connected to be energizable. When the charging relay 310 is in the open state, the rectifier circuit 430 and the battery 320 are disconnected to be non-energizable. For example, when the charging relay 310 is in the open state, the vehicle 3 does not request power feeding.

The battery 320 is a chargeable direct-current power supply, and includes, for example, a lithium ion battery, a nickel-metal hydride battery, or the like. The battery 320 stores the power fed from the power transmission apparatus 10 to the power reception apparatus 20. In addition, the battery 320 can feed power to the traveling motor of the vehicle 3. The battery 320 is electrically connected to the traveling motor via a power control unit (PCU). The PCU is a power conversion apparatus that converts the direct-current power of the battery 320 into alternating-current power and feeds the alternating-current power to the traveling motor. Each switching element of the PCU includes an IGBT, and performs a switching operation according to a control signal from the vehicle ECU 330.

The vehicle ECU 330 is an electronic control apparatus that controls the vehicle 3. The vehicle ECU 330 has a hardware configuration similar to that of the power transmission ECU 110. Signals from various sensors mounted on the vehicle 3 are input to the vehicle ECU 330. In addition, a positioning signal received by the GPS receiver 360 is input to the vehicle ECU 330. The vehicle ECU 330 can acquire current position information of the vehicle 3 from the GPS receiver 360. Then, the vehicle ECU 330 executes various types of control on the basis of the signals input from various sensors.

For example, the vehicle ECU 330 transfers power from the primary coil 11 to the secondary coil 21 in a non-contact manner, and executes non-contact charge control of storing the power received by the secondary coil 21 in the battery 320. In the non-contact charge control, the vehicle ECU 330 controls the rectifier circuit 430, the charging relay 310, the third communication apparatus 340, and the fourth communication apparatus 350. The non-contact charge control includes power control for controlling charging power and communication control for controlling communication with the feeding apparatus 5. In the power control, the vehicle ECU 330 controls the switching element included in the rectifier circuit 430 to adjust power (charging power) fed from the power reception apparatus 20 to the battery 320. In the communication control, the vehicle ECU 330 controls the third communication apparatus 340 and the fourth communication apparatus 350.

The third communication apparatus 340 is a vehicle-side communication apparatus that performs wide-area wireless communication. The third communication apparatus 340 performs wireless communication with the first communication apparatus 120 of the feeding apparatus 5 in a state before the vehicle 3 traveling on the road 4 approaches the D-WPT lane. The wide-area wireless communication is two-way wireless communication. Communication between the first communication apparatus 120 and the third communication apparatus 340 is performed by high-speed wireless communication.

The fourth communication apparatus 350 is a vehicle-side communication apparatus that performs narrow-area wireless communication. The fourth communication apparatus 350 performs wireless communication with the second communication apparatus 130 of the feeding apparatus 5 in a state where the vehicle 3 has approached or entered the D-WPT lane. The narrow-area wireless communication is one-way wireless signaling. The one-way wireless signaling is point to point signaling (P2PS). P2PS is used to notify the feeding apparatus 5 of the vehicle identification information from the vehicle 3 in each activity of pairing, alignment check, magnetic coupling check, power transfer termination, and power transmission termination. In addition, P2PS can be used as an alignment check means (Alignment check) in a lateral direction. The lateral direction is the width direction of the lane and is the width direction of the vehicle 3.

The GPS receiver 360 detects the current position of the vehicle 3 on the basis of positioning information obtained from a plurality of positioning satellites. The current position information of the vehicle 3 detected by the GPS receiver 360 is transmitted to the vehicle ECU 330.

Note that, in the feeding apparatus 5, the filter circuit 230 may be included in the management apparatus 8 instead of the segment 7. That is, the filter circuit 230 may be installed beside the road 4. In this case, the power conversion unit 12 includes the PFC circuit 210, the inverter 220, and the filter circuit 230, and the primary apparatus 13 includes the power transmission-side resonant circuit 240.

In addition, the filter circuit 230 may be individually provided for the primary coil 11, or may be collectively provided for the plurality of primary coils 11.

In addition, the filter circuit 230 is not limited to the T-type filter, but may be, for example, a band-pass filter in which a coil and a capacitor are connected in series. The same applies to the filter circuit 420 of the vehicle 3.

In addition, in the power transmission apparatus 10, a changeover switch for switching the primary coil 11 to be energized may be provided in each primary apparatus 13 when the inverter 220 is connected to the plurality of primary coils 11. The changeover switch may be provided in the management apparatus 8 beside the road 4 or may be provided near the primary coil 11.

In addition, the power transmission-side resonant circuit 240 is not limited to the configuration in which primary coil 11 and the resonant capacitor are connected in series. The primary coil 11 and the resonant capacitor may be connected in parallel, or may be connected in a combination of parallel and series. In short, it is sufficient if the power transmission-side resonant circuit 240 is configured such that the resonance frequency of the power transmission-side resonant circuit 240 matches the drive frequency of the inverter 220, and the connection relationship among the components is not particularly limited. The same applies to the power reception-side resonant circuit 410 of the vehicle 3.

In addition, the drive frequency of the inverter 220 is not limited to 85 kHz, and may be a frequency around 85 kHz. In short, the drive frequency of the inverter 220 may be a predetermined frequency band including 85 kHz.

In addition, the power transmission apparatus 10 may have a configuration in which a plurality of inverters 220 is connected to an output-side power line (direct-current power line) of the PFC circuit 210.

In addition, the foreign object sensing apparatus 140 may be provided not only on the ground side but also on the vehicle 3 side. For example, the foreign object sensing apparatus on the vehicle 3 side can be configured to stop a power feeding request until the vehicle 3 passes through the primary coil 11 when sensing a foreign object, a living object, or the like existing above the primary coil 11.

In addition, in the wireless power transfer system 1, the information transmitted from the vehicle 3 to the feeding apparatus 5 using the narrow-area wireless communication includes a power feeding request, a power feeding power request value, and the like in addition to the vehicle identification information. The power feeding request is information indicating that power transfer from the primary coil 11 is requested. The power feeding power request value is a request value of the amount of power transferred from the feeding apparatus 5 to the vehicle 3. The vehicle ECU 330 can calculate a power feeding power request value based on a state of charge (SOC) of the battery 320.

In addition, the wireless power transfer system 1 can achieve not only a method of feeding power from the ground to the vehicle 3, but also a method of feeding power from the vehicle 3 to the ground. In this case, the rectifier circuit 430 can be replaced with an inverter to achieve rectification at the time of power feeding and power reception.

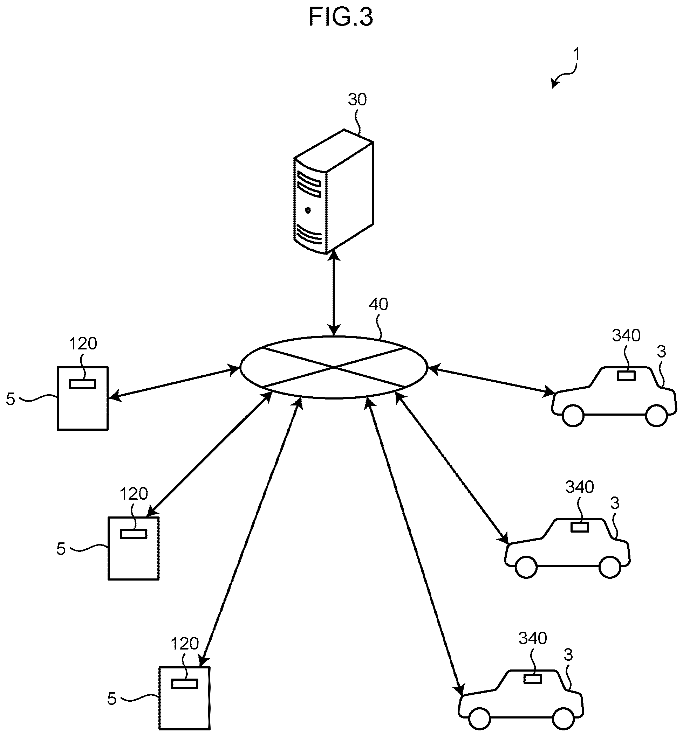

FIG. 3 is a schematic diagram for describing wide-area wireless communication of the wireless power transfer system 1.

In the wireless power transfer system 1, the vehicle 3 can communicate with a server 30, and the feeding apparatus 5 can communicate with the server 30. The server 30 is connected to a network 40 and can communicate with a plurality of vehicles 3 and a plurality of feeding apparatuses 5 via the network 40. The network 40 includes a wide area network (WAN) which is a public communication network such as the Internet, a telephone communication network of a mobile phone, and the like.

The vehicles 3 are connected to the network 40 by wide-area wireless communication using the third communication apparatuses 340. The vehicles 3 transmit information to the server 30 and receive information from the server 30.

The feeding apparatuses 5 are connected to the network 40 by wide-area wireless communication using the first communication apparatuses 120. The feeding apparatuses 5 transmit information to the server 30 and receive information from the server 30.

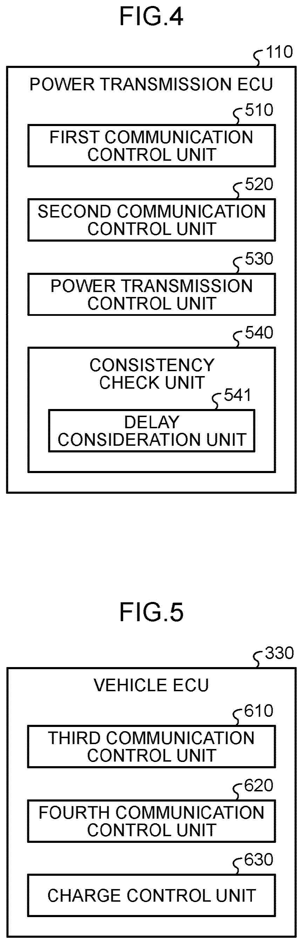

FIG. 4 is a block diagram illustrating a functional configuration of the power transmission ECU 110. The power transmission ECU 110 includes a first communication control unit 510, a second communication control unit 520, a power transmission control unit 530, and a consistency check unit 540. In addition, the consistency check unit 540 includes a delay consideration unit 541.

The first communication control unit 510 executes first communication control for controlling the first communication apparatus 120. The first communication control controls wide-area wireless communication on the feeding apparatus 5 side, and controls communication of the feeding apparatus 5 using the first communication apparatus 120. That is, the first communication control controls communication of the management apparatus 8 of the feeding apparatus 5. The first communication control controls communication between the feeding apparatus 5 and the network 40 and also controls communication between the feeding apparatus 5 and the server 30 via the network 40. The first communication control unit 510 is a supply equipment communication controller (SECC).

The second communication control unit 520 executes second communication control for controlling the second communication apparatus 130. The second communication control controls narrow-area wireless communication on the feeding apparatus 5 side, and controls communication of the feeding apparatus 5 using the second communication apparatus 130. That is, the second communication control controls communication of the segment 7 of the feeding apparatus 5. The second communication control controls communication between the feeding apparatus 5 and the vehicle 3 as communication not via the network 40. The second communication control unit 520 is a primary device communication controller (PDCC).

The power transmission control unit 530 executes power transmission control for controlling the power transmission apparatus 10. The power transmission control controls power transmission power, and controls the power conversion unit 12 of the power transmission apparatus 10. The power transmission control unit 530 executes power control for controlling the PFC circuit 210 and the inverter 220.

The consistency check unit 540 is a consistency check means capable of determining consistency between the information of the wide-area wireless communication and the information of the narrow-area wireless communication by comparing the information of the wide-area wireless communication received from the third communication apparatus 340 of the vehicle 3 with the information of the narrow-area wireless communication received from the fourth communication apparatus 350 of the vehicle 3.

The delay consideration unit 541 is a delay consideration means that takes into consideration the delay of the wide-area wireless communication received by the first communication apparatus 120 from the third communication apparatus 340 of the vehicle 3.

FIG. 5 is a block diagram illustrating a functional configuration of the vehicle ECU 330. The vehicle ECU 330 includes a third communication control unit 610, a fourth communication control unit 620, and a charge control unit 630.

The third communication control unit 610 executes third communication control for controlling the third communication apparatus 340. The third communication control controls wide-area wireless communication on the vehicle 3 side, and controls communication of the vehicle 3 using the third communication apparatus 340. The third communication control controls communication between the vehicle 3 and the network 40 and also controls communication between the vehicle 3 and the server 30 via the network 40. The third communication control unit 610 is an EV communication controller (EVCC).

The fourth communication control unit 620 executes fourth communication control for controlling the fourth communication apparatus 350. The fourth communication control controls narrow-area wireless communication on the vehicle 3 side, and controls communication of the vehicle 3 using the fourth communication apparatus 350. The fourth communication control controls communication between the vehicle 3 and the feeding apparatus 5 as communication not via the network 40. The fourth communication control unit 620 is a secondary device communication controller (SDCC).

The charge control unit 630 executes charge control for controlling the power reception apparatus 20 and the charging relay 310. The charge control includes power control for controlling received power in the power reception apparatus 20 and relay control for controlling a connection state between the secondary apparatus 22 and the battery 320. The charge control unit 630 executes power control for controlling the rectifier circuit 430. The charge control unit 630 executes relay control for switching the open/close state of the charging relay 310.

In the wireless power transfer system 1 configured as described above, wireless power transfer from the feeding apparatus 5 to the vehicle 3 is performed in a state in which wireless communication is established between the vehicle 3 and the feeding apparatus 5. In a state where the vehicle 3 and the feeding apparatus 5 are paired by wireless communication, power is transferred in a non-contact manner from the primary coil 11 on the ground side to the secondary coil 21 on the vehicle side. Then, in the vehicle 3, charge control of feeding the power received by the secondary coil 21 to the battery 320 is performed.

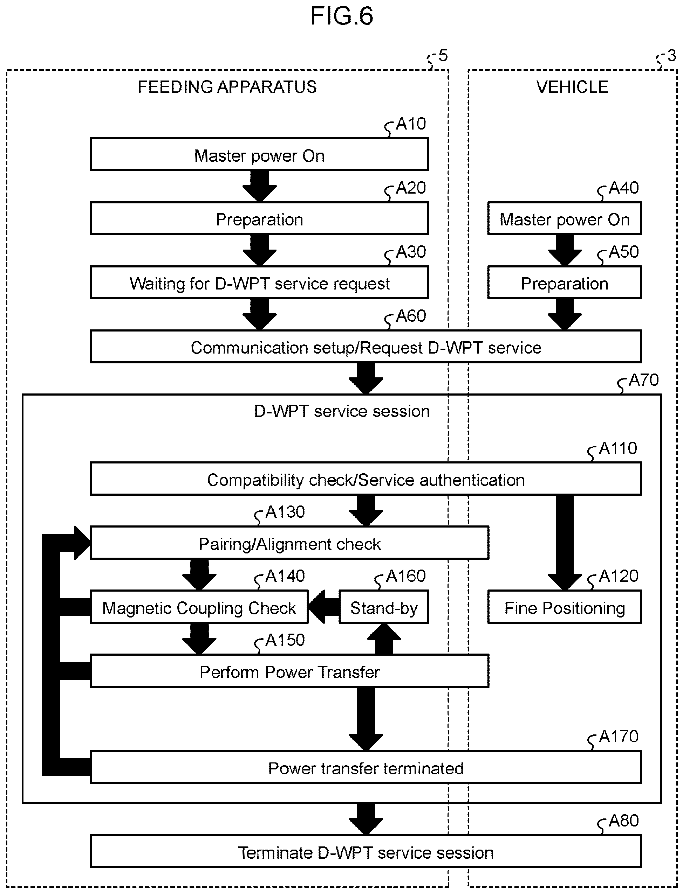

Next, a power transfer process (D-WPT process) will be described with reference to FIG. 6. The power transfer process is a process structured as a chain of multiple activities and derived from states and corresponding transitions.

FIG. 6 is a diagram for describing the power transfer process. In FIG. 6, basic activities for describing the power transfer process are illustrated. The thick arrows illustrated in FIG. 6 represent transition lines. The state of the wireless power transfer system 1 in the power transfer process is represented by the activities that constitute the power transfer process.

The activities that constitute the power transfer process include a power transfer service session (D-WPT service session A70), which is activity of a stage of performing power transfer, activity of a stage before performing power transfer, and activity of a stage after performing power transfer. In addition, the activities can be described as performed by different operation subjects depending on the presence or absence of communication between the feeding apparatus 5 and the vehicle 3. The activities are divided into those indicating a state of only the feeding apparatus 5 side without communication, those indicating a state of only vehicle 3 side without communication, and those indicating a state of both the feeding apparatus 5 and the vehicle 3 with communication.

As illustrated in FIG. 6, the activities include master power supply on state (Master power On) A10, preparation (Preparation) A20, waiting for request from the vehicle 3 (Waiting for D-WPT service request) A30, master power supply on state (Master power On) A40, preparation (Preparation) A50, communication setup (Communication setup) and D-WPT service request (Request D-WPT service) A60, D-WPT service session (D-WPT service session) A70, and D-WPT service session termination (Terminate D-WPT service session) A80.

The preparation A20 is a preparation state of the feeding apparatus 5. In the preparation A20, the feeding apparatus 5 performs activation of the circuit and confirmation of safety without communicating with the vehicle 3. When the state enters the master power supply on state A10, the feeding apparatus 5 transitions to the state of the preparation A20. Then, in a case where the feeding apparatus 5 activates the circuit and can confirm safety in the preparation A20, the state transitions to the waiting for request from the vehicle 3 A30. On the other hand, when there is a problem in the feeding apparatus 5, the feeding apparatus 5 notifies the vehicle 3 of information (unavailability notification) indicating that the wireless power transfer system 1 cannot be used through wide-area wireless communication. The first communication apparatus 120 transmits the unavailability notification to the vehicle 3.

The preparation A50 is a preparation state of the vehicle 3. In the preparation A50, the vehicle 3 performs activation of the circuit and confirmation of safety without communicating with the feeding apparatus 5. When the state enters the master power supply on state A40, the vehicle 3 transitions to the state of the preparation A50. Then, in a case where the vehicle 3 activates the circuit and can confirm safety in the preparation A50, the state transitions to the communication setup and D-WPT service request A60. On the other hand, when there is a problem in the vehicle 3, the vehicle 3 does not start the wide-area wireless communication and does not perform the subsequent sequence in the D-WPT process.

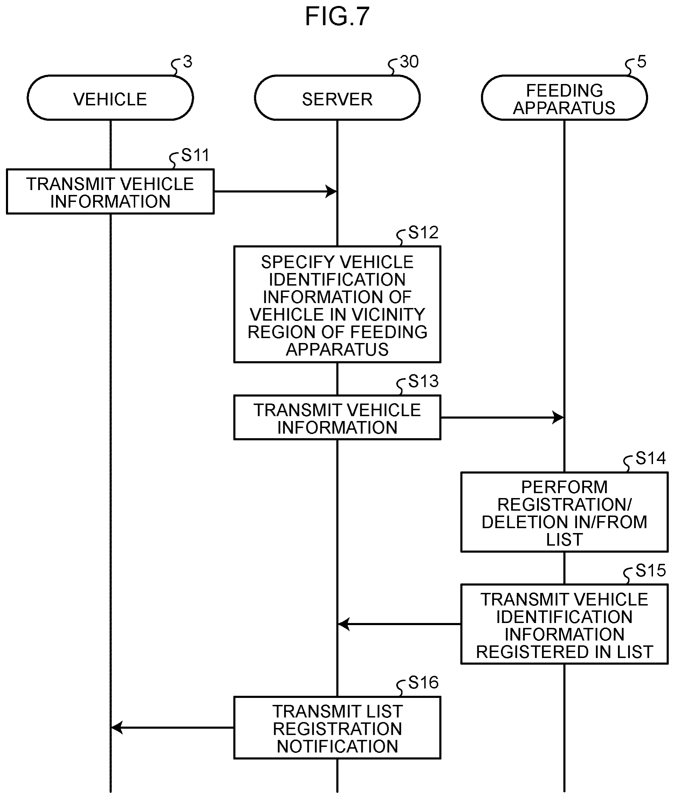

The communication setup and D-WPT service request A60 is started by the vehicle ECU 330. In the communication setup and D-WPT service request A60, the vehicle ECU 330 starts wide-area wireless communication. First, when the vehicle 3 transitions from the preparation A50 to the communication setup and D-WPT service request A60, the third communication apparatus 340 transmits a D-WPT service request signal. The third communication apparatus 340 performs wireless communication with the first communication apparatus 120 corresponding to the D-WPT lane in which the vehicle 3 is scheduled to enter or has entered. The first communication apparatus 120, which is a communication target, is selected on the basis of a relative positional relationship between the current position of the vehicle 3 and the position of the D-WPT lane. On the feeding apparatus 5 side, when the first communication apparatus 120 receives the D-WPT service request signal in the state of the waiting for request from the vehicle 3 A30, the state transitions to the communication setup and D-WPT service request A60. Various pieces of information of the wide-area wireless communication and the P2PS communication are linked by using vehicle identification information. A processing sequence of the communication setup and D-WPT service request A60 is illustrated in FIG. 7.

FIG. 7 is a sequence diagram illustrating a case where communication using wide-area wireless communication is performed between the vehicle 3 and the feeding apparatus 5. The vehicle 3 transmits the vehicle information to the server 30 (step S11). In step S11, the third communication apparatus 340 of the vehicle 3 transmits the vehicle information to the server 30. The vehicle information includes vehicle identification information, various parameters of the power reception apparatus 20, current position information of the vehicle 3, and requested power. The vehicle ECU 330 calculates the requested power based on the SOC of the battery 320. In step S11, the vehicle ECU 330 causes the third communication apparatus 340 to transmit the vehicle information every predetermined time. The predetermined time is set according to the distance from the current position of the vehicle 3 to the start point of the D-WPT lane. The shorter the distance from the vehicle 3 to the start point of the D-WPT lane, the shorter the interval of the predetermined time.

When receiving the vehicle information from the vehicle 3, the server 30 specifies the vehicle identification information of the vehicle 3 located in the vicinity region of the feeding apparatus 5 based on the current position information of the vehicle 3 included in the vehicle information (step S12). In step S12, the server 30 specifies the vehicle 3 located in a predetermined vicinity region of the feeding apparatus 5 based on the current position information of the vehicle 3 and the position information of the feeding apparatus 5. The vicinity region is set to, for example, a region within 500 meters.

Upon specifying the vehicle identification information of the vehicle 3, the server 30 transmits the vehicle information to the feeding apparatus 5 (step S13). In step S13, a transmission apparatus of the server 30 transmits the vehicle information to the feeding apparatus 5.

Upon receiving the vehicle information from the server 30, the feeding apparatus 5 registers/deletes the vehicle identification information in/from an identification information list (step S14). In step S14, the power transmission ECU 110 registers/deletes the vehicle identification information in/from the identification information list such that the vehicle identification information associated with the vehicle information is registered in the identification information list without excess or deficiency.

After registering/deleting the vehicle identification information in/from the identification information list, the feeding apparatus 5 transmits the vehicle identification information registered in the identification information list to the server 30 (step S15). In step S15, the first communication apparatus 120 of the feeding apparatus 5 transmits the vehicle identification information to the server 30.

Then, upon receiving the vehicle identification information from the feeding apparatus 5, the server 30 transmits a list registration notification to the vehicle 3 corresponding to the vehicle identification information registered in the identification information list (step S16). In step S16, the communication apparatus of the server 30 transmits the list registration notification to the vehicle 3. The list registration notification is a notification indicating that the vehicle identification information is registered in the identification information list, and includes the identification information of the feeding apparatus 5 and the position information of the feeding apparatus 5.

As described above, when the vehicle 3 starts the wide-area wireless communication and both the feeding apparatus 5 and the vehicle 3 are in the state of the communication setup and D-WPT service request A60, the communication setup through the wide-area wireless communication is successful. With this successful communication setup, the state transitions to the D-WPT service session A70.

The description returns to FIG. 6. The D-WPT service session A70 transfers power from the power transmission-side resonant circuit 240 of the feeding apparatus 5 to the power reception-side resonant circuit 410 of the vehicle 3 in a non-contact manner in a state where a communication connection is established between the feeding apparatus 5 and the vehicle 3. The D-WPT service session A70 starts with the successful communication setup and ends upon termination of the communication. When the communication ends in the state of the D-WPT service session A70, the state transitions to the D-WPT service session termination A80.

In the D-WPT service session termination A80, the vehicle 3 terminates the wide-area wireless communication with the feeding apparatus 5. The vehicle 3 and the feeding apparatus 5 can receive a trigger for terminating the D-WPT service session A70. Then, the vehicle ECU 330 prevents the D-WPT from being started for the secondary apparatus 22 and the vehicle 3 until the third communication apparatus 340 receives a next notification (D-WPT service request signal).

Detailed activities of the D-WPT service session A70 will now be described.

The D-WPT service session A70 includes compatibility check (Compatibility check) and service authentication (Service authentication) A110, vehicle lateral direction fine positioning (Fine Positioning) A120, pairing (Pairing) and alignment check (Alignment check) A130, magnetic coupling check (Magnetic Coupling Check) A140, power transfer execution (Perform Power Transfer) A150, stand-by (Stand-by) A160, and power transfer termination (Power transfer terminated) A170.

The compatibility check and service authentication A110 will be described. After the successful communication setup, the vehicle ECU 330 and the power transmission ECU 110 confirm that the primary apparatus 13 and the secondary apparatus 22 are compatible. The compatibility check is performed on the feeding apparatus 5 side based on information associated with vehicle identification information acquired through communication. The check items include the minimum ground level of the secondary apparatus 22, the shape type of the secondary apparatus 22, the circuit topology of the secondary apparatus 22, the self-resonance frequency of the secondary apparatus 22, the number of secondary coils 21, and the like.

In the compatibility check and service authentication A110, first, the vehicle 3 transmits compatibility information (Compatibility Information) of the power reception apparatus 20 from the third communication apparatus 340 to the feeding apparatus 5. The first communication apparatus 120 of the feeding apparatus 5 receives the compatibility information of the power reception apparatus 20 from the vehicle 3. Then, the first communication apparatus 120 of the feeding apparatus 5 transmits compatibility information of the power transmission apparatus 10 to the vehicle 3. The third communication apparatus 340 of the vehicle 3 receives the compatibility information of the power transmission apparatus 10 from the feeding apparatus 5.

The elements of the compatibility information transmitted from the vehicle 3 to the feeding apparatus 5 include vehicle identification information, WPT power class (WPT Power Classes), gap class (Air Gap Class), WPT drive frequency (WPT Operating Frequencies), WPT frequency adjustment, WPT type (WPT Type), WPT circuit topology (WPT Circuit Topology), fine positioning method (Fine Positioning Method), pairing method (Pairing Method), alignment method (Alignment Method), and presence/absence information of power adjustment function.

The elements of the compatibility information transmitted from the feeding apparatus 5 to the vehicle 3 include feeding apparatus identification information, WPT power class, gap class, WPT drive frequency, WPT frequency adjustment, WPT type, a WPT circuit topology, fine positioning method, pairing method, alignment method, presence/absence information of power adjustment function, and the like.

Each element name will be described in detail. Note that each element of the compatibility information transmitted from the vehicle 3 to the feeding apparatus 5 will be described, and the description of the compatibility information transmitted from the feeding apparatus 5 to the vehicle 3 overlapping with the compatibility information transmitted from the vehicle 3 to the feeding apparatus 5 will be omitted.

The gap class is information indicating a gap class at which the secondary apparatus 22 can receive power. The WPT power class is information indicating a power class at which the secondary apparatus 22 can receive power. The WPT drive frequency is information indicating a frequency of received power received by the secondary apparatus 22. The WPT frequency adjustment is information indicating whether to adjust the drive frequency. The WPT type is information indicating a shape type of the secondary apparatus 22, and indicates a coil shape of the secondary coil 21. Examples of the WTP type include a circle and a solenoid. The WPT circuit topology is information indicating a connection structure between the secondary coil 21 and the resonant capacitor. The WTP circuit topology includes series and parallel. The fine positioning method is information indicating how to perform positioning when performing positioning. The pairing method is a method in which the vehicle 3 performs pairing for specifying the feeding apparatus 5. The alignment method indicates a method of confirming the relative positions of the secondary apparatus 22 and the primary apparatus 13 before starting the power transmission.

The vehicle lateral direction fine positioning A120 will be described. The vehicle 3 performs the vehicle lateral direction fine positioning A120 prior to the pairing and alignment check A130 or in parallel with these activities. When determining that the vehicle 3 approaches or enters the region (WPT lane) where the feeding apparatus 5 is installed, the vehicle ECU 330 starts the vehicle lateral direction fine positioning A120.

The vehicle ECU 330 guides the vehicle 3 to perform positioning of the primary apparatus 13 and the secondary apparatus 22 within a range in which sufficient magnetic coupling for wireless power transfer is established.

The vehicle lateral direction fine positioning A120 is basically performed manually or automatically on the vehicle 3 side. The vehicle lateral direction fine positioning A120 can cooperate with an advanced driver assistance system (ADAS). This communication termination is the D-WPT service session termination A80.

Then, the activity of the vehicle lateral direction fine positioning A120 continues until the vehicle 3 leaves the D-WPT charging site or the state changes to the communication termination, and can be executed based on the positioning information transmitted from the feeding apparatus 5 to the vehicle 3 through wide-area wireless communication.

The pairing and alignment check A130 will be described. Here, pairing and alignment check will be separately described.

Pairing will be described. The P2PS interface that performs narrow-area wireless communication ensures that the primary apparatus 13 and the secondary apparatus 22 are uniquely paired. A process of the pairing state is as described below.

First, the vehicle ECU 330 recognizes that the vehicle 3 has approached or entered the D-WPT lane. For example, the vehicle ECU 330 has map information including the D-WPT lane, and compares the map information with the position information of the own vehicle obtained by the GPS receiver 360 to recognize approach or entry according to the straight line distance or the like. The vehicle 3 transmits which D-WPT lane the vehicle 3 has approached to the server 30 through wide-area wireless communication. In short, the third communication apparatus 340 notifies the cloud of a signal indicating that the vehicle 3 has approached one of the D-WPT lanes. Further, when the vehicle ECU 330 recognizes the approach or entry of the vehicle 3 to the D-WPT lane, the fourth communication apparatus 350 starts transmitting a modulated signal at regular intervals for pairing between the primary apparatus 13 and the secondary apparatus 22.

In addition, the feeding apparatus 5 may recognize that the vehicle 3 has approached or entered the D-WPT lane using information acquired from the server 30 through wide-area wireless communication. The server 30 allocates the vehicle identification information of the vehicle 3 approaching in each D-WPT lane to the feeding apparatus 5 corresponding to the lane. Since the feeding apparatus 5 only needs to refer to the vehicle identification information the number of which is reduced by the server 30, authentication processing can be performed in a short time. When the feeding apparatus 5 recognizes that the vehicle 3 is approaching the D-WPT lane, the second communication apparatus 130 enters a stand-by mode. In the stand-by mode, it waits to receive a modulated signal from the fourth communication apparatus 350 of the vehicle 3. The modulated signal includes the vehicle identification information.

When the second communication apparatus 130 receives the modulated signal from the vehicle 3, the feeding apparatus 5 compares the vehicle identification information received through the narrow-area wireless communication with the vehicle identification information in the identification information list obtained as a result of the wide-area wireless communication with the plurality of vehicles 3 heading for the D-WPT lane. By this comparison, the feeding apparatus 5 identifies the vehicle 3.

When recognizing that the vehicle 3 is outside the D-WPT lane, the vehicle ECU 330 stops transmitting the modulated signal from the fourth communication apparatus 350. The vehicle ECU 330 can determine whether the vehicle has passed through the D-WPT lane based on the map information and the position information of the own vehicle.

When determining that the vehicle 3 is not traveling in the D-WPT lane or when determining that the vehicle 3 is not approaching the D-WPT lane, the feeding apparatus 5 stops waiting for the modulated signal from the fourth communication apparatus 350.

Pairing is executed on the primary apparatus 13 until the vehicle 3 exits the D-WPT charging site or the state changes to the communication termination. Once pairing is complete, the state transitions to the alignment check.

The alignment check will be described. The alignment check is intended to confirm that the lateral distance between the primary apparatus 13 and the secondary apparatus 22 is within an acceptable range. The alignment check is performed by using narrow-area wireless communication (P2PS).

The alignment check is continuously executed based on the P2PS until the vehicle 3 leaves the D-WPT charging site or the state changes to the communication termination. The result of the alignment check can be transmitted from the first communication apparatus 120 to the third communication apparatus 340 through wide-area wireless communication.

The magnetic coupling check A140 will be described. In the magnetic coupling check A140, the feeding apparatus 5 checks the magnetic coupling state and checks that the secondary apparatus 22 is within an acceptable range. When the magnetic coupling check A140 ends, the state transitions to the power transfer execution A150.

The power transfer execution A150 will be described. In this state, the feeding apparatus 5 performs power transfer to the power reception apparatus 20. The power transmission apparatus 10 and the power reception apparatus 20 need to have capability of controlling transfer power (transmitted power and received power) for the usefulness of MF-D-WPT and the protection of the power reception apparatus 20 and the battery 320. The larger power transfer helps to increase its movement distance without static wireless charging and conductive charging of the power reception apparatus 20. However, the capacity of the battery 320 varies depending on the vehicle type of the vehicle 3, and the driving power demand may fluctuate rapidly. Examples of this sudden fluctuation include sudden regenerative braking. When the regenerative braking is applied during traveling in the D-WPT lane, the regenerative braking is prioritized, so that the received power from the power reception apparatus 20 is fed to the battery 320 in addition to the regenerative power. In this case, it is necessary to adjust the transfer power by the power reception apparatus 20 in order to protect the battery 320 from overcharge.

In this state, communication is not newly started between the feeding apparatus 5 and the power reception apparatus 20 despite the necessity of power control. This is because communication can impair response and accuracy in power control due to its instability and latency. Accordingly, the feeding apparatus 5 and the power reception apparatus 20 perform power transfer and control thereof on the basis of known information up to this state.

The feeding apparatus 5 increases the transfer power of the magnetic coupling check in response to a power request transmitted from the third communication apparatus 340 in advance using wide-area wireless communication. The feeding apparatus 5 attempts to keep the current and voltage fluctuations within their ranges and to maximize the power transferred during the transition.

The power reception apparatus 20 basically receives transmitted power from the power transmission apparatus 10 without any control. However, the power reception apparatus 20 starts control when the transmitted power exceeds or is about to exceed a limit, such as the rated power of the battery 320 that varies according to the charge state or the driving power demand of the vehicle 3. In addition, the power control in the vehicle ECU 330 is also required to cope with malfunction in wide-area wireless communication. This malfunction leads to a contradiction between the power control target in the primary apparatus 13 and the request from the third communication apparatus 340, and a sudden failure of the power reception apparatus 20 and the battery 320 during power transfer. The power reception apparatus 20 controls the power transferred under the power request rate notification of which is provided by the first communication apparatus 120.

The power request is determined based on compatibility check information such as the WPT circuit topology, geometry, ground clearance, and electromagnetic compatibility (EMC) of the vehicle 3 and the primary apparatus 13. The magnetic field varies depending on these specifications, and it is necessary to transfer power within a range satisfying the EMC.

The power control in the power transmission ECU 110 and the power reception apparatus 20 may interfere with each other. In particular, in a case where the feeding apparatus 5 achieves a power request larger than the latest power limit in the power reception apparatus 20 through wide-area wireless communication, there is a possibility of interference. An example of this is rapid regenerative control with a relatively small battery 320 in the vehicle 3. If possible, it is desirable that the feeding apparatus 5 can detect inconsistency between a power supply control target and the limit and adjust the power transfer in order to eliminate the inconsistency.

For example, when power transfer is interrupted for a short period of time while the secondary apparatus 22 is still on the primary apparatus 13, such as when a foreign object on the primary apparatus 13 is sensed by the foreign object sensing apparatus 14 or when magnetic coupling is reduced due to misalignment of the secondary apparatus 22, the state transitions to the stand-by A160. Note that when the foreign object sensing apparatus is provided in the vehicle 3, the foreign object may be sensed on the vehicle 3 side.

When the secondary apparatus 22 passes over the primary apparatus 13, the state transitions to the power transfer transmission A170. In this case, since the magnetic coupling between the two apparatuses is weakened, the transferred power is reduced. Since the feeding apparatus 5 can detect that the magnetic coupling is weakened by monitoring the transfer power, the feeding apparatus 5 basically determines the state transition to the power transfer transmission A170 and then starts to lower the voltage to stop the power transfer.

The stand-by A160 will be described. In this state, the power transfer is interrupted for a short period of time for some reason, and when both the vehicle 3 and the feeding apparatus 5 are ready for the D-WPT, the state returns to the power transfer execution A150. When there is a possibility of interrupting power transfer, the state is brought into the stand-by A160.

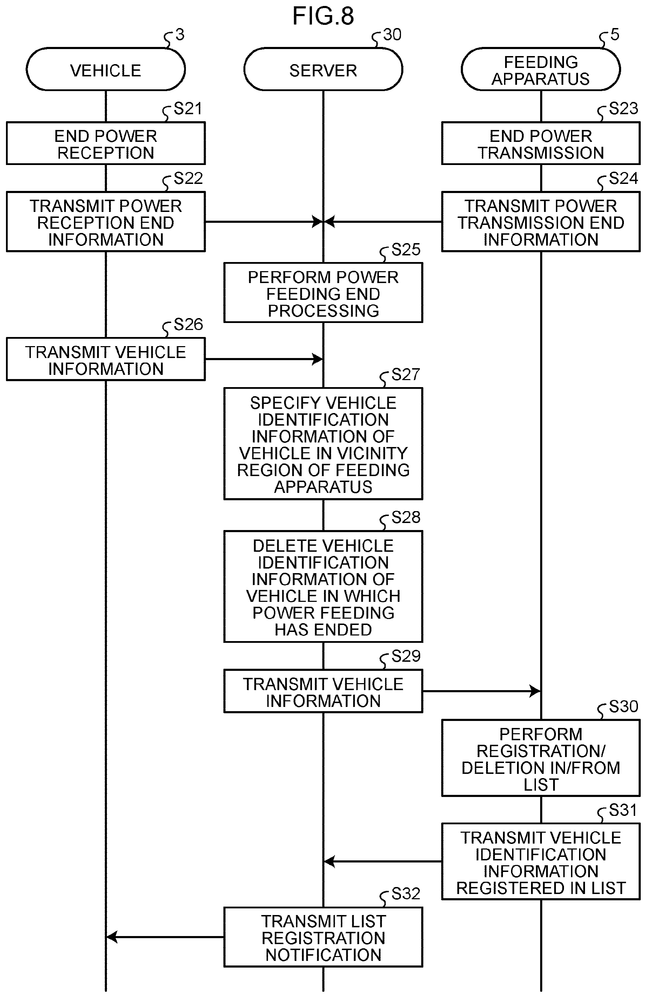

The power transfer transmission A170 will be described. In this state, the feeding apparatus 5 reduces the transferred power to zero, and holds or uploads power transfer result data such as the total transfer power, the power transfer efficiency, and the failure history. Each piece of data is tagged with vehicle identification information. Finally, the feeding apparatus 5 deletes the vehicle identification information of the vehicle 3 that has passed through the D-WPT lane. As a result, the feeding apparatus 5 can prepare for pairing and power transfer to be performed with respect to another vehicle thereafter. A processing sequence of the power transfer transmission A170 is illustrated in FIG. 8.

FIG. 8 is a sequence diagram illustrating an operation after dynamic power feeding from the feeding apparatus 5 to the vehicle 3 is ended. When the power reception in the power reception apparatus 20 of the vehicle 3 from the feeding apparatus 5 ends (step S21), the vehicle 3 transmits power reception end information to the server 30 (step S22). In step S22, the power reception end information is transmitted from the third communication apparatus 340 of the vehicle 3. The power reception end information includes, for example, vehicle identification information of the vehicle 3, received power from the feeding apparatus 5, power reception efficiency, and an abnormality sensing result as information regarding power reception from the feeding apparatus 5.

When the processing of step S21 is performed, the feeding apparatus 5 ends the power transmission to the vehicle 3 (step S23). The processing of step S21 and the processing of step S23 may or may not be performed simultaneously. When the processing of step S23 is performed, the feeding apparatus 5 transmits power transmission end information to the server 30 (step S24). In step S24, the power transmission end information is transmitted from the first communication apparatus 120 of the feeding apparatus 5.

When receiving the power reception end information from the vehicle 3 and receiving the power transmission end information from the feeding apparatus 5, the server 30 performs power feeding end processing of ending the power feeding from the feeding apparatus 5 to the vehicle 3 (step S25). In the power feeding end processing, processing of calculating the power feed amount from the feeding apparatus 5 to the vehicle 3 and processing of billing the user of the vehicle 3 based on the calculated power feed amount are performed based on the power reception end information and the power transmission end information.

In addition, the vehicle 3 transmits the vehicle information to the server 30 regardless of the power feeding end processing (step S26). In step S26, the vehicle information is transmitted from the third communication apparatus 340 of the vehicle 3.

When receiving the vehicle information from the vehicle 3 after performing the power feeding end processing, the server 30 specifies the vehicle identification information of the vehicle 3 located in the vicinity region of each feeding apparatus 5 based on the vehicle information (step S27).

Then, when the power feeding end processing on a certain vehicle 3 has already been performed in a certain feeding apparatus 5, the server 30 deletes the vehicle identification information of the vehicle 3 on which the power feeding end processing has already been performed from the vehicle identification information of the vehicle 3 in the vicinity region of the certain feeding apparatus 5 specified in the processing of step S27 (step S28).

Thereafter, the server 30 transmits, to each feeding apparatus 5, vehicle information associated with the vehicle identification information not been deleted in the processing of step S28 among the pieces of vehicle identification information of the vehicles 3 specified as being located in the vicinity region of each feeding apparatus 5 (step S29).

After the vehicle information is transmitted to each feeding apparatus 5 in the processing of step S29, when the feeding apparatus 5 receives the vehicle information from the server 30, the feeding apparatus 5 registers/deletes the vehicle identification information in/from the identification information list (step S30). The processing of step S30 is similar to the processing of step S14 in FIG. 7. Thereafter, the feeding apparatus 5 transmits the vehicle identification information registered in the identification information list to the server 30 (step S31). The processing of step S31 is similar to the processing of step S15 in FIG. 7.

Then, upon receiving the vehicle identification information from the feeding apparatus 5, the server 30 transmits a list registration notification to the vehicle 3 corresponding to the vehicle identification information registered in the identification information list (step S32). The processing of step S32 is similar to the processing of step S16 in FIG. 7.

As a result, in a case where the processing illustrated in FIG. 8 is performed, in the identification information list, the vehicle identification information is registered regarding the vehicle 3 that is located in the vicinity region of each feeding apparatus 5, to which the power feeding from the feeding apparatus 5 has not ended, and for which a deletion request for the vehicle identification information has not been made. Then, when the vehicle identification information of the vehicle 3 is registered in the identification information list of any of the feeding facilities 2, the vehicle 3 receives the list registration notification. Therefore, the vehicle ECU 330 can determine that the own vehicle is registered in any of the feeding apparatuses 5 by receiving the list registration notification. Then, when the vehicle 3 goes out of the vicinity region of the feeding apparatus 5, the vehicle identification information of the vehicle 3 is deleted from the identification information list of the feeding apparatus 5.

The description returns to FIG. 6. In addition, in the power transfer transmission A170, the power reception apparatus 20 does not need to do anything to set the transfer power to zero. The P2PS interface is kept active when the vehicle 3 is in the D-WPT lane and the state of the power reception apparatus 20 automatically transitions to pairing for power transfer from the next primary apparatus 13. As indicated by the transition lines in FIG. 6, the state transitions from the power transfer transmission A170 to the pairing and alignment check A130. As illustrated in FIG. 6, when a predetermined transition condition is satisfied, it is possible to transition from the magnetic coupling check A140 to the pairing and alignment check A130 and transition from the power transfer execution A150 to the pairing and alignment check A130. The pairing may be individually performed on the plurality of primary coils 11, or the plurality of primary coils 11 may be bundled and the pairing may be performed at the representative point.

Then, in a case where there is no D-WPT request from the vehicle ECU 330, or in a case where a series of states from the communication setup and D-WPT service request A60 to the power transfer transmission A170 is prohibited, the D-WPT service session A70 transitions to the D-WPT service session termination A80 and stops the wide-area wireless communication between the first communication apparatus 120 and the third communication apparatus 340. For example, the D-WPT stops when the charge state of the battery 320 is too high or when the power reception apparatus 20 is too hot because of continuous power transfer. Such unnecessary D-WPT can be disabled simply by deactivating the P2PS interface. However, by stopping the wide-area wireless communication, the power transmission ECU 110 can release the memory occupied for the vehicle 3 by ending the established wide-area wireless communication without requiring the D-WPT.

In addition, the D-WPT service session A70 is not limited to transitions such as those indicated by the transition lines illustrated in FIG. 6. In the D-WPT service session A70, when the activity after the pairing and alignment check A130 ends, in a case where a condition that the power transfer process stays in the D-WPT service session A70 is satisfied, transition is not made to the D-WPT service session termination A80, but to the compatibility check and service authentication A110. For example, in a case where a predetermined transition condition is satisfied in the state of the magnetic coupling check A140, the state can transition to the compatibility check and service authentication A110.

In the wireless power transfer system 1 according to the embodiment, the power transmission ECU 110 compares the information of the wide-area wireless communication in which the delay is taken into consideration by the delay consideration unit 541 with the information of the narrow-area wireless communication. Then, the power transmission ECU 110 performs the power feeding operation from the feeding apparatus 5 to the vehicle 3 (power reception apparatus 20) when the information of the wide-area wireless communication in which the delay is taken into consideration is consistent with the information of the narrow-area wireless communication. On the other hand, the power transmission ECU 110 performs preliminarily set predetermined measures in a case where the content of the information of the wide-area wireless communication in which the delay is taken into consideration and the content of the information of the narrow-area wireless communication are different from each other and are inconsistent. Note that the inconsistency includes various inconsistencies such as a case where the same information, such as requested power (Power request) and power transfer termination (Power transfer terminated) is transmitted and received through the wide-area wireless communication and the narrow-area wireless communication, and values are different, or a case where the state and the communication content do not match. In the wireless power transfer system 1 according to the embodiment, as the predetermined measures, for example, when there is an inconsistency between the information of the wide-area wireless communication in which the delay is taken into consideration and the information of the narrow-area wireless communication, it is determined that there is an abnormality and the power transfer is stopped.

Note that examples of a method for determining whether or not the information of the wide-area wireless communication in which the delay is taken into consideration and the information of the narrow-area wireless communication are inconsistent with each other include those described below.

That is, the delay consideration unit 541 has a predetermined communication delay time of the wide-area wireless communication, and the consistency check unit 540 compares the information of the narrow-area wireless communication at a time earlier by the communication delay time with the acquired information of the wide-area wireless communication to determine whether there is an inconsistency. Alternatively, the third communication apparatus 340 and the fourth communication apparatus 350 of the vehicle 3 may transmit a time stamp that is an identification means capable of identifying a transmission timing of the information together with information such as requested power. Then, the delay consideration unit 541 calculates the information of the wide-area wireless communication and the information of the narrow-area wireless communication, which are a combination of the same time stamp. Then, the consistency check unit 540 determines consistency based on whether or not the information of the wide-area wireless communication and the information of the narrow-area wireless communication, which are a combination of the same time stamp (transmission timing), match each other.

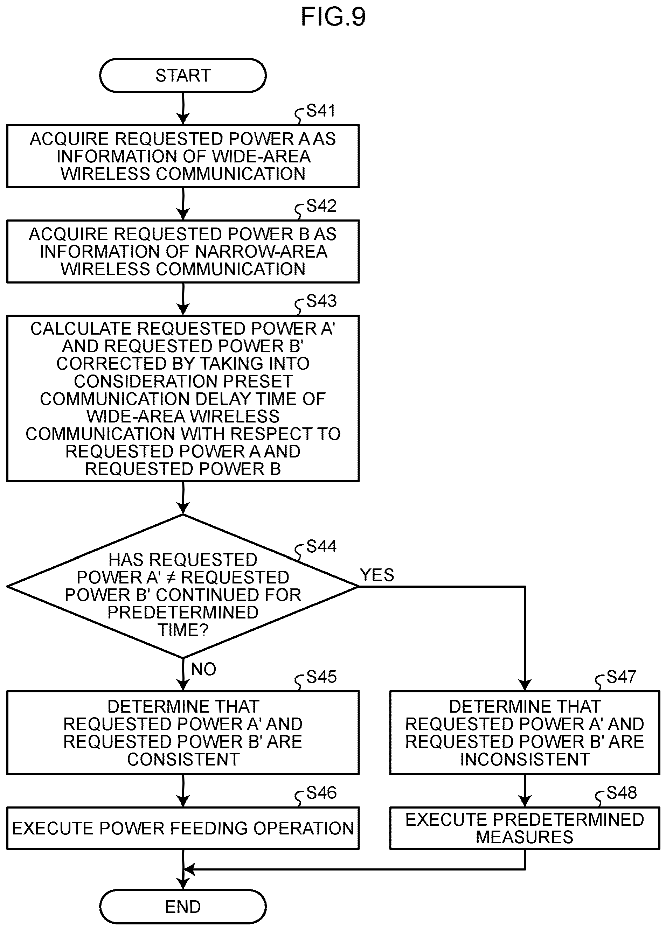

FIG. 9 is a flowchart illustrating a first example of control for determining consistency by comparing information of wide-area wireless communication with information of narrow-area wireless communication.

First, the feeding apparatus 5 acquires requested power A as the information of the wide-area wireless communication from the third communication apparatus 340 of the vehicle 3 using the first communication apparatus 120 (step S41). Next, the feeding apparatus 5 acquires requested power B as the information of the narrow-area wireless communication from the fourth communication apparatus 350 of the vehicle 3 using the second communication apparatus 130 (step S42). Next, the feeding apparatus 5 calculates, using the delay consideration unit 541 of the power transmission ECU 110, requested power A' and requested power B' corrected by taking into consideration the preset communication delay time of the wide-area wireless communication with respect to the requested power A and the requested power B (step S43). Next, the feeding apparatus 5 determines whether or not the requested power A' ≠ the requested power B' continues for a predetermined time using the consistency check unit 540 of the power transmission ECU 110 (step S44). When determining that the requested power A' ≠ the requested power B' has not continued for the predetermined time (No in step S44), the consistency check unit 540 determines that the requested power A' and the requested power B' are consistent (step S45). Next, the feeding apparatus 5 executes the power feeding operation (power transfer) to the vehicle 3 (step S46). Then, the feeding apparatus 5 ends the series of control. On the other hand, when determining that the requested power A' ≠ the requested power B' continues for the predetermined time (Yes in step S44), the consistency check unit 540 determines that the requested power A' and the requested power B' are inconsistent (step S47). Next, the feeding apparatus 5 determines that an abnormality has occurred and executes predetermined measures such as stopping the power feeding operation (power transfer) to the vehicle 3 (step S48). Then, the feeding apparatus 5 ends the series of control.

As a result, in the wireless power transfer system 1 according to the embodiment, the consistency can be determined based on whether or not the information of the wide-area wireless communication and the information of the narrow-area wireless communication corrected in consideration of the communication delay time of the wide-area wireless communication match each other.

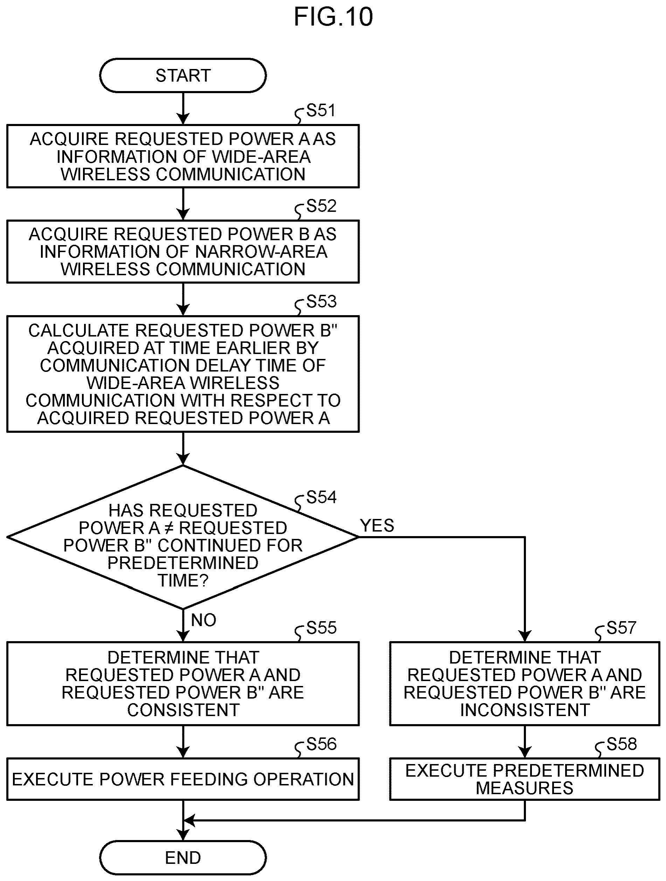

FIG. 10 is a flowchart illustrating a second example of control for determining consistency by comparing information of wide-area wireless communication with information of narrow-area wireless communication.

First, the feeding apparatus 5 acquires requested power A as the information of the wide-area wireless communication from the third communication apparatus 340 of the vehicle 3 using the first communication apparatus 120 (step S51). Next, the feeding apparatus 5 acquires requested power B as the information of the narrow-area wireless communication from the fourth communication apparatus 350 of the vehicle 3 using the second communication apparatus 130 (step S52). Next, the feeding apparatus 5 calculates, using the delay consideration unit 541 of the power transmission ECU 110, requested power B" as information of the narrow-area wireless communication acquired at a time earlier by the preset communication delay time of the wide-area wireless communication with respect to the acquired requested power A (step S53). Next, the feeding apparatus 5 determines whether or not the requested power A ≠ the requested power B" continues for a predetermined time using the consistency check unit 540 of the power transmission ECU 110 (step S54). When determining that the requested power A ≠ the requested power B" has not continued for the predetermined time (No in step S54), the consistency check unit 540 determines that the requested power A and the requested power B" are consistent (step S55). Next, the feeding apparatus 5 executes the power feeding operation (power transfer) to the vehicle 3 (step S56). Then, the feeding apparatus 5 ends the series of control. On the other hand, when determining that the requested power A ≠ the requested power B" continues for the predetermined time (Yes in step S54), the consistency check unit 540 determines that the requested power A and the requested power B" are inconsistent (step S57). Next, the feeding apparatus 5 determines that an abnormality has occurred and executes predetermined measures such as stopping the power feeding operation (power transfer) to the vehicle 3 (step S58). Then, the feeding apparatus 5 ends the series of control.

As described above, in the wireless power transfer system 1 according to the embodiment, the consistency can be determined based on whether or not the acquired information of the wide-area wireless communication matches the information of the narrow-area wireless communication acquired at a time earlier by the communication delay time of the wide-area wireless communication.

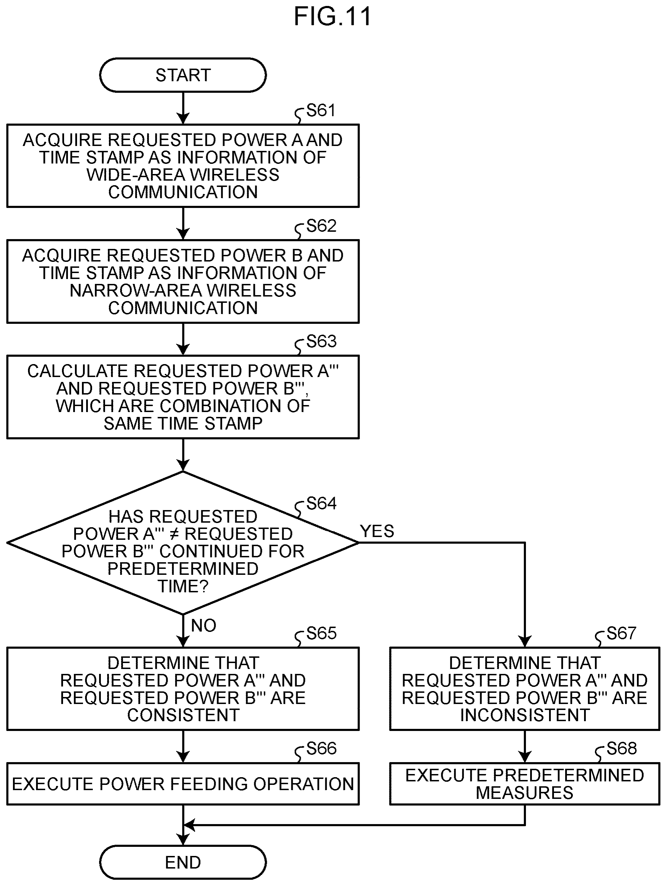

FIG. 11 is a flowchart illustrating a third example of control for determining consistency by comparing information of wide-area wireless communication with information of narrow-area wireless communication.

First, the feeding apparatus 5 acquires requested power A and a time stamp as the information of the wide-area wireless communication from the third communication apparatus 340 of the vehicle 3 using the first communication apparatus 120 (step S61). Next, the feeding apparatus 5 acquires requested power B and a time stamp as the information of the narrow-area wireless communication from the fourth communication apparatus 350 of the vehicle 3 using the second communication apparatus 130 (step S62). Next, the feeding apparatus 5 calculates requested power A‴ and requested power B‴, which are a combination of the same time stamp, using the delay consideration unit 541 of the power transmission ECU 110 (step S63). Next, the feeding apparatus 5 determines whether or not the requested power A‴ ≠ the requested power B‴ continues for a predetermined time using the consistency check unit 540 of the power transmission ECU 110 (step S64). When determining that the requested power A‴ ≠ the requested power B‴ has not continued for the predetermined time (No in step S64), the consistency check unit 540 determines that the requested power A‴ and the requested power B‴ are consistent (step S65). Next, the feeding apparatus 5 executes the power feeding operation (power transfer) to the vehicle 3 (step S66). Then, the feeding apparatus 5 ends the series of control. On the other hand, when determining that the requested power A‴ ≠ the requested power B‴ continues for the predetermined time (Yes in step S64), the consistency check unit 540 determines that the requested power A‴ and the requested power B‴ are inconsistent (step S67). Next, the feeding apparatus 5 determines that an abnormality has occurred and executes predetermined measures such as stopping the power feeding operation (power transfer) to the vehicle 3 (step S68). Then, the feeding apparatus 5 ends the series of control.

As described above, in the wireless power transfer system 1 according to the embodiment, it is possible to determine consistency depending on whether or not the information of the wide-area wireless communication and the information of the narrow-area wireless communication, which are a combination of the same transmission timing, match each other.

In addition, in the wireless power transfer system 1 according to the embodiment, the predetermined measures may be changed according to the cause of the inconsistency between the information of the wide-area wireless communication in which the delay is taken into consideration and the information of the narrow-area wireless communication. For example, when the cause of the inconsistency is a communication failure of the vehicle 3, the power feeding operation (power transfer) is stopped. On the other hand, when the cause of the inconsistency is a communication failure of the feeding apparatus 5, the power feeding operation (power transfer) is executed, and a log of the power feeding operation (power transfer) is transmitted to the vehicle 3 after the resolution of the communication failure of the feeding apparatus 5.

In addition, in the wireless power transfer system 1 according to the embodiment, information may be shared by the plurality of feeding apparatuses 5 installed close to each other, and it may be confirmed whether or not there is a vehicle 3 in which the information of the wide-area wireless communication in which the delay is taken into consideration and the information of the narrow-area wireless communication are determined to be inconsistent. Then, when a plurality of vehicles 3 determined to have inconsistency is confirmed, the feeding apparatus 5 is determined to be the cause of the inconsistency. On the other hand, when only one vehicle 3 is determined to have inconsistency, the vehicle 3 is determined to be the cause of the inconsistency, and the power feeding operation (power transfer) to the vehicle 3 is stopped.

As a method of confirming the cause of inconsistency, for example, there are a method of confirming the cause of the inconsistency at the same timing with respect to a plurality of vehicles 3 existing in a predetermined range on the road 4, a method of determining a time for confirming the cause of the inconsistency in advance and confirming the vehicle 3 having inconsistency during the time, and the like. Then, in a situation where the vehicle 3 corresponding to the D-WPT is not traveling much, it is preferable to adopt the method of determining a time for confirming the cause of the inconsistency in advance and confirming the vehicle 3 having inconsistency during the time.

In addition, in the wireless power transfer system 1 according to the embodiment, in a case where a time in which the cause of the inconsistency cannot be determined occurs, for example, the power feeding operation (power transfer) may be forcibly stopped, and the power feeding operation (power transfer) may be resumed after the inconsistency is resolved and the whole is cleared. Alternatively, in a case where a time in which the cause of the inconsistency cannot be determined occurs, for example, the power feeding operation (power transfer) may be continued while the cause of the inconsistency is unclear, the feeding apparatus 5 may notify the vehicle 3 of the inconsistency, and the feeding apparatus 5 may request the vehicle 3 so that the feeding apparatus 5 acquires a log to be submitted to the vehicle 3 from the feeding apparatus 5.

In addition, in the wireless power transfer system 1 according to the embodiment, when one of the feeding apparatus 5 and the vehicle 3 outputs a termination request, the power feeding operation (power transfer) may be stopped regardless of consistency between the information of the wide-area wireless communication in which the delay is taken into consideration and the information of the narrow-area wireless communication.

### Industrial Applicability

The present invention can provide a dynamic non-contact power feeding system, a power feeding apparatus, and a power reception apparatus capable of performing predetermined measures according to consistency between information of wide-area wireless communication and information of narrow-area wireless communication.

### Reference Signs List

- 1: WIRELESS POWER TRANSFER SYSTEM

- 2: FEEDING FACILITY
- 3: VEHICLE
- 4: ROAD
- 5: FEEDING APPARATUS
- 6: ALTERNATING-CURRENT POWER SUPPLY
- 10: POWER TRANSMISSION APPARATUS
- 11: PRIMARY COIL
- 20: POWER RECEPTION APPARATUS
- 21: SECONDARY COIL
- 540: CONSISTENCY CHECK UNIT
- 541: DELAY CONSIDERATION UNIT

## Claims

1. A dynamic non-contact power feeding system that feeds, in a non-contact manner, power from a road-side power feeding apparatus to a traveling vehicle equipped with a vehicle-side power reception apparatus, wherein
the road-side power feeding apparatus includes a first communication apparatus for performing wide-area wireless communication with the vehicle-side power reception apparatus, and a second communication apparatus for performing narrow-area wireless communication with the vehicle-side power reception apparatus,
the vehicle-side power reception apparatus includes a third communication apparatus for performing the wide-area wireless communication with the road-side power feeding apparatus, and a fourth communication apparatus for performing the narrow-area wireless communication with the road-side power feeding apparatus,
the road-side power feeding apparatus includes a consistency check means capable of comparing information of the wide-area wireless communication transmitted from the third communication apparatus and acquired by the first communication apparatus with information of the narrow-area wireless communication transmitted from the fourth communication apparatus and acquired by the second communication apparatus to determine consistency between the information of the wide-area wireless communication and the information of the narrow-area wireless communication,
the consistency check means includes a delay consideration means that takes into consideration a delay of the wide-area wireless communication, and
the consistency check means compares the information of the wide-area wireless communication with the information of the narrow-area wireless communication in consideration of the delay,
performs a power feeding operation from the road-side power feeding apparatus to the vehicle-side power reception apparatus when the information of the wide-area wireless communication and the information of the narrow-area wireless communication are consistent, and
performs preliminarily set predetermined measures when the information of the wide-area wireless communication and the information of the narrow-area wireless communication are inconsistent.

2. The dynamic non-contact power feeding system according to claim 1, wherein
the delay consideration means has a predetermined communication delay time in the wide-area wireless communication, and
the consistency check means compares information of the narrow-area wireless communication acquired at a time earlier by the communication delay time with respect to the acquired information of the wide-area wireless communication.

3. The dynamic non-contact power feeding system according to claim 1, wherein
the third communication apparatus and the fourth communication apparatus respectively transmit identification means capable of identifying a transmission timing of the information to the first communication apparatus and the second communication apparatus together with the information, and
the delay consideration means outputs the information of the wide-area wireless communication and the information of the narrow-area wireless communication at a same transmission timing to the consistency check means based on the acquired identification means.

4. A power feeding apparatus provided in a road on which a vehicle equipped with a vehicle-side power reception apparatus travels, the power feeding apparatus feeding power to the traveling vehicle in a non-contact manner, the power feeding apparatus comprising:
a first communication apparatus for performing wide-area wireless communication with a third communication apparatus of the vehicle-side power reception apparatus, and a second communication apparatus for performing narrow-area wireless communication with a fourth communication apparatus of the vehicle-side power reception apparatus; and
a consistency check means capable of comparing information of the wide-area wireless communication transmitted from the third communication apparatus and acquired by the first communication apparatus with information of the narrow-area wireless communication transmitted from the fourth communication apparatus and acquired by the second communication apparatus to determine consistency between the information of the wide-area wireless communication and the information of the narrow-area wireless communication, wherein
the consistency check means includes a delay consideration means that takes into consideration a delay of the wide-area wireless communication, and
the consistency check means compares the information of the wide-area wireless communication with the information of the narrow-area wireless communication in consideration of the delay,
performs a power feeding operation to the vehicle-side power reception apparatus when the information of the wide-area wireless communication and the information of the narrow-area wireless communication are consistent, and
performs preliminarily set predetermined measures when the information of the wide-area wireless communication and the information of the narrow-area wireless communication are inconsistent.

5. A power reception apparatus mounted on a traveling vehicle, the power reception apparatus receiving power fed from a road-side power feeding apparatus in a non-contact manner to the vehicle, the power reception apparatus comprising:
a third communication apparatus for performing wide-area wireless communication with a first communication apparatus of the road-side power feeding apparatus, and a fourth communication apparatus for performing narrow-area wireless communication with a second communication apparatus of the road-side power feeding apparatus, wherein
a consistency check means, capable of comparing information of the wide-area wireless communication transmitted from the third communication apparatus and acquired by the first communication apparatus with information of the narrow-area wireless communication transmitted from the fourth communication apparatus and acquired by the second communication apparatus to determine consistency between the information of the wide-area wireless communication and the information of the narrow-area wireless communication, is provided in the road-side power feeding apparatus, and includes a delay consideration means that takes into consideration a delay of the wide-area wireless communication compares the information of the wide-area wireless communication with the information of the narrow-area wireless communication in consideration of the delay,
when the information of the wide-area wireless communication and the information of the narrow-area wireless communication are consistent, a power feeding operation is performed to receive power from the road-side power feeding apparatus, and
when the information of the wide-area wireless communication and the information of the narrow-area wireless communication are inconsistent, preliminarily set predetermined measures are performed by the road-side power feeding apparatus.
